# EUROPEAN PATENT APPLICATION

(11) **EP 4 797 810 A1**
(43) Date of publication of application: **26.08.2026**
(21) Application number: 24887467.9
(22) Date of filing: 19.07.2024
(51) Int. Cl.: H04W 52/02, H04W 72/231

(54) **SIGNAL PROCESSING METHOD AND APPARATUS**

(30) Priority: 09.11.2023 CN 202311489167
(71) Applicant: ZTE CORPORATION, Shenzhen, Guangdong 518057 (CN)
(72) Inventor: HU, Youjun, Shenzhen, Guangdong 518057 (CN); DAI, Bo, Shenzhen, Guangdong 518057 (CN); CHEN, Mengzhu, Shenzhen, Guangdong 518057 (CN); YANG, Weiwei, Shenzhen, Guangdong 518057 (CN); LIU, Kun, Shenzhen, Guangdong 518057 (CN); MA, Xiaoying, Shenzhen, Guangdong 518057 (CN); GUO, Qiujin, Shenzhen, Guangdong 518057 (CN); XU, Jun, Shenzhen, Guangdong 518057 (CN)
(74) Representative: Chimini, Francesco
(86) International application number: PCT/CN2024/106513
(87) International publication number: WO 2025/097843

(57) **Abstract**

Provide are signal processing methods and apparatuses. The method includes: determining, by a first communication node, a first communication node behavior according to configuration information and a monitored low power consumption signal.

## Description

### Cross-Reference to Related Application

This disclosure is based upon and claims priority to Chinese Patent Application No. CN202311489167.4 filed on November 9, 2023 and entitled "Signal Processing Method and Apparatus", the disclosure of which is hereby incorporated by reference in its entirety.

### Technical Field

Embodiments of the present disclosure relate to the technical field of communications, and in particular, to a signal processing method and apparatus.

### Background

In order to reduce terminal power consumption, reduce time delays, and improve User Perceived Throughput (UPT), a Wake-Up Receiver (WUR) is used in relevant technologies. The WUR is a low power consumption receiver, is configured to receive a low power consumption signal during wireless communication, and can activate a device and enter an operation state by receiving a specific low power consumption signal when the device is in a low power consumption mode such as an idle state, a connected state, an inactive state, etc., thereby reducing standby power consumption of the device.

The wake up of a specific group or a specific user terminal is not clear currently. Therefore, how to wake up a more refined group or specific user terminal to perform corresponding behaviors with minimal overhead is a problem that currently needs to be solved.

### Summary

Embodiments of the present disclosure provide a signal processing method and apparatus.

An embodiment of the present disclosure provides a signal processing method. The method includes: a first communication node determines a first communication node behavior according to configuration information and a low power consumption signal.

Another embodiment of the present disclosure provides a signal processing method. The method includes: a second communication node transmits a low power consumption signal and configuration information to a first communication node such that the first communication node determines a first communication node behavior according to the configuration information and the low power consumption signal.

Yet another embodiment of the present disclosure provides a signal processing apparatus. The apparatus is located on a first communication node and includes a determination module, which is configured to determine a first communication node behavior according to configuration information and a low power consumption signal.

Yet another embodiment of the present disclosure provides a signal processing apparatus. The apparatus is located on a second communication node and includes a sending module, which is configured to send a low power consumption signal and configuration information to a first communication node such that the first communication node determines a first communication node behavior according to the configuration information and the low power consumption signal.

Yet another embodiment of the present disclosure further provides a computer-readable storage medium. The computer-readable storage medium stores a computer program. The computer program is configured to, when being run, implement steps in any one of the above method embodiments.

Yet another embodiment of the present disclosure further provides an electronic apparatus. The electronic apparatus includes a memory and a processor. The memory stores a computer program. The processor is configured to run the computer program to execute steps in any one of the above method embodiments.

### Brief Description of the Drawings

Fig. 1 is a block diagram of a hardware structure of a mobile terminal of a signal processing method according to an embodiment of the present disclosure.
Fig. 2 is a network architecture diagram of a signal processing system according to an embodiment of the present disclosure.
Fig. 3 is a flowchart of a signal processing method according to an embodiment of the present disclosure.
Fig. 4 is a schematic diagram of a monitoring space according to an embodiment of the present disclosure.
Fig. 5 is a schematic diagram of a correspondence relationship between a monitoring occasion within the same monitoring duration and a UE group or UE according to an embodiment of the present disclosure.
Fig. 6 is a schematic diagram of a correspondence relationship between a monitoring duration and a UE group or UE according to an embodiment of the present disclosure.
Fig. 7 is a schematic diagram of a correspondence relationship between monitoring occasions within different monitoring durations and a UE group or UE according to an embodiment of the present disclosure.
Fig. 8 is a flowchart of a signal processing method according to another embodiment of the present disclosure.
Fig. 9 is a structural block diagram of a signal processing apparatus according to an embodiment of the present disclosure.
Fig. 10 is a structural block diagram of a signal processing apparatus according to another embodiment of the present disclosure.
Fig. 11 is a schematic diagram of a Monitoring periodicity according to an embodiment of the present disclosure.
Fig. 12 is a schematic diagram of one cyclic redundancy check attachment sharing a plurality of UEs according to an embodiment of the present disclosure.

### Detailed Description of the Embodiments

The embodiments of the present disclosure are described below in detail with reference to the drawings and the embodiments.

It is to be noted that terms "first", "second" and the like in the description, claims and the above mentioned drawings of the present disclosure are used for distinguishing similar objects rather than describing a specific sequence or a precedence order.

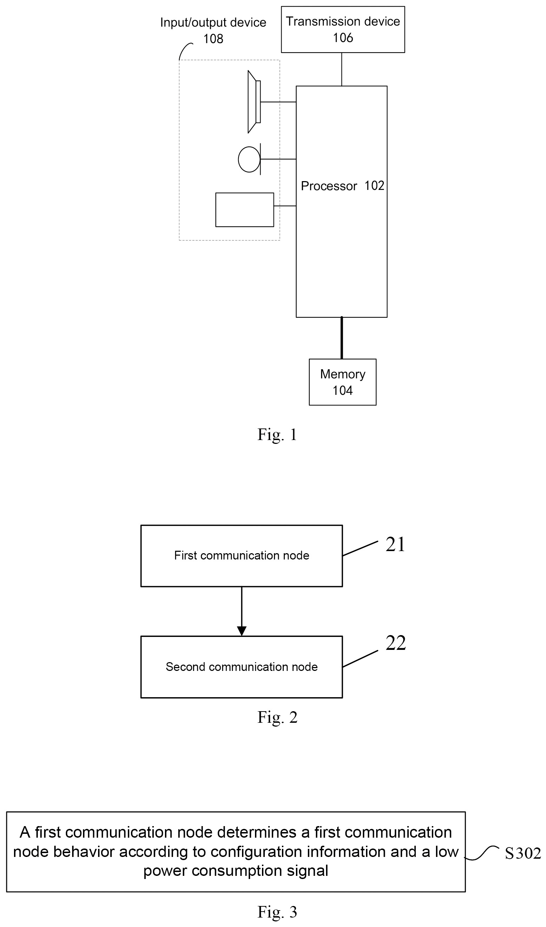

The method embodiments provided in the embodiments of the present disclosure may be executed in a mobile terminal, a computer terminal or a similar computing apparatus. By being operated on the mobile terminal as an example, Fig. 1 is a block diagram of a hardware structure of a mobile terminal of a signal processing method according to an embodiment of the present disclosure. As shown in Fig. 1, the mobile terminal may include one or more (only one is shown in Fig. 1) processors 102 (the processor 102 may include, but is not limited to, a processing apparatus such as a microprocessor MCU or a programmable logic device FPGA) and a memory 104 for storing data. The above mobile terminal may further include a transmission device 106 for achieving a communication function and an input/output device 108. Those skilled in the art may understand that the structure shown in Fig. 1 is only a schematic diagram, which does not limit the structure of the above mobile terminal. For example, the mobile terminal may also include more or less components than those shown in Fig. 1, or have a different configuration from that shown in Fig. 1.

The memory 104 may be configured to store a computer program, for example, a software program and a module of application software, such as a computer program corresponding to a signal processing method in the embodiments of the present disclosure. The processor 102 runs the computer program stored in the memory 104, so as to execute various functional applications and data processing, that is, to realize the above method. The memory 104 may include a high-speed random access memory, and may further include a non-volatile memory, such as one or more magnetic disk memory apparatuses, a flash memory device, or other non-volatile solid-state memory devices. In some embodiments, the memory 104 may further include memories remotely disposed relative to the processor 102. The remote memories may be connected to the mobile terminal by using a network. Examples of the above NW include, but are not limited to, the Internet, an intranet, a local area NW, a mobile communication NW, and a combination thereof.

The transmission device 106 is configured to receive or transmit data via a network. The specific example of the above network may include a wireless network provided by a communication provider of the mobile terminal. In an example, the transmission device 106 includes a Network Interface Controller (NIC), and may be connected to other NW devices by using a base station, so as to communicate with the Internet. In an example, the transmission device 106 is a Radio Frequency (RF) module, which is configured to communicate with the Internet in a wireless manner.

The embodiments of the present disclosure may be operated on a network architecture shown in Fig. 2. As shown in Fig. 2, the network architecture includes a first communication node and a second communication node. The first communication node includes, but is not limited to, a user terminal, a relay device, and an Internet of Things device; and the second communication node includes, but is not limited to, a base station, a relay device, a Transmission-Reception Point (TRP). The first communication node performs related UE behaviors according to configuration information and a low power consumption signal, which are sent by the second communication node. A low power consumption wake-up signal may be used in an idle state, an inactive state, and a connected state, and may reduce terminal power consumption or reduce time delays, thereby improving user experience.

This embodiment provides a signal processing method operating on the above mobile terminal or network architecture. Fig. 3 is a flowchart of a signal processing method according to an embodiment of the present disclosure. The method is applied to the above first communication node side. As shown in Fig. 3, the flow includes the following steps.

At S302, a first communication node determines a first communication node behavior according to configuration information and a low power consumption signal. The low power consumption signal includes, but is not limited to, an LP-WUS and an LP-SS.

In an exemplary embodiment, when Identity Document (ID) information carried by the first communication node matches low power consumption signal information and/or the configuration information, whether itself may trigger relative behaviors may be determined. The relative behaviors (i.e., the first communication node behavior) include at least one of the following: being awakened, processing a Physical Downlink Control Channel (PDCCH), processing a paging channel, processing Paging Early Indication (PEI), sending a Physical Random Access Channel (PRACH), or processing the low power consumption signal.

Processing the PEI includes: the PDCCH or Downlink Control Information (DCI) corresponding to the PEI is processed.

In this embodiment, processing includes, but is not limited to, monitoring, detection, listening, and receiving.

In this embodiment, the paging channel includes a paging PDCCH and/or a paging PDSCH.

In this embodiment, the ID information carried by the first communication node is information that indicates a first communication node identity or identity, including information based on a 5G-Shortened-Temporary Mobile Subscriber Identity (5G-S-TMSI) or a 5G-TMSI or User Equipment (UE) identity information or a Radio Network Temporary Identity (RNTI), as well as information including IMSI, an MSISDN phone number, an IMEI user identification code, etc.

By using the low power consumption signal, signal receiving may be performed at low power consumption, such that the power consumption of the first communication node may be reduced.

In an embodiment, the configuration information includes at least one of the following: processing configuration information of the low power consumption signal, target node configuration information, Paging Occasion (PO) configuration information, Paging Frame (PF) configuration information, or PEI configuration information.

In an embodiment, the target node configuration information is determined based on at least one of the following: a PO, the number of POs, a PF (the number of PFs), or a DRX (the number of DRXes).

In this embodiment, the processing configuration information of the low power consumption signal includes at least one of the following: a monitoring space identity, a monitoring space index, a Monitoring periodicity, a monitoring window, a monitoring duration, a monitoring offset, a monitoring occasion (i.e., a processing occasion), temporary identity information, a frequency domain bandwidth, or an information type.

The information type is a type that is configured to determine a monitored low power consumption signal, where the type of the low power consumption signal includes LP-SS and LP-WUS; or configured to determine a monitoring manner, where the monitoring manner includes monitoring UE specific (i.e., a specific UE), group specific (i.e., a specific terminal group), and cell specific (i.e., a specific cell).

In an exemplary embodiment, the processing configuration information of the low power consumption signal includes at least one of the following: one or more monitoring windows or monitoring durations being included within one Monitoring periodicity; one or more monitoring durations being included within one monitoring window; one or more monitoring occasions being included within one monitoring window or one Monitoring periodicity or one monitoring duration; continuous monitoring occasions being included within one monitoring window or one Monitoring periodicity or one monitoring duration; or the number of times for processing the low power consumption signal on one monitoring occasion or monitoring window or monitoring duration or Monitoring periodicity having a lower limit and/or an upper limit.

In an exemplary embodiment, for the monitoring of the LP-WUS or LP-SS, the number of times for detection or blind detection on one monitoring occasion or monitoring window or monitoring duration or Monitoring periodicity has a lower limit and/or an upper limit.

In an embodiment, one monitoring occasion is defined in one or more time units. The time unit includes, but is not limited to, a slot, a frame, subframes, millisecond, microsecond, a time unit defined based on Tc, where the Tc is a basic time unit of a system.

In an embodiment, the processing configuration information of the low power consumption signal includes at least one of the following: the low power consumption signal transmitted in a monitoring space being a low power consumption synchronous signal, in a case where the monitoring space identity or the monitoring space index is 0, where the low power consumption synchronous signal carries first information; the low power consumption signal transmitted in the monitoring space being a low power consumption wake-up signal, in a case where the monitoring space identity or the monitoring space index is not 0, where the low power consumption wake-up signal carries second information; the low power consumption signal transmitted in the monitoring space carrying the first information, in a case where the value of the monitoring space identity or the monitoring space index is 0 or is located within a first value range; or the low power consumption signal transmitted in the monitoring space carrying the second information, in a case where the value of the monitoring space identity or the monitoring space index is not 0 or is located within a second value range. The first information includes cell wake-up information, UE group wake-up information, system information change indication, cellular mobile alarm system information, and emergency alarm system information; and the second information includes wake-up information, UE group wake-up information, and UE wake-up information.

In an exemplary embodiment, when the monitoring space identity or the monitoring space index is 0, the LP-SS is monitored; when the monitoring space identity or the monitoring space index is not 0, the LP-WUS is monitored; when the monitoring space identity or the monitoring space index includes 0 as part of a range such as 0-x₁, the LP-SS is monitored; and when the monitoring space identity or the monitoring space index does not include 0 as part of a range such as x₁-x₂, the LP-SS is monitored.

In an exemplary embodiment, the target node configuration information is indicated by a core network, an Access and Mobility Management Function (AMF), MAC-layer signaling, high-layer signaling, or a System Information Block (SIB); and the target node configuration information comprises at least one of the following information: a node group, a node group set, a node group list, a node, a node set, or a node list.

In an exemplary embodiment, the target node configuration information is the node group, node group set, node group list, node, node set, and node list information that is configured based on the ID information of the first communication node, and also includes the node group, node set, and node list information of the ID information of the first communication node.

In an exemplary embodiment, processing the low power consumption signal includes: a position of the processed low power consumption signal is determined.

In an exemplary embodiment, determining the position of the processed low power consumption signal includes: the position of the processed low power consumption signal is determined according to at least one of PO configuration information, PF configuration information, or PEI configuration information.

In an exemplary embodiment, determining the position of the processed low power consumption signal according to at least one of the PO configuration information, the PF configuration information, or the PEI configuration information includes: the position of the processed low power consumption signal is determined according to a position of a PO, a position of a PF, or a position of a PEI, where the position of the processed low power consumption signal is associated with the position of the PO, the position of the PF, or the position of the PEI; and the position of the PO, the position of the PF, or the position of the PEI is determined according to the PO configuration information, the PF configuration information, and the PEI configuration information, respectively.

In an exemplary embodiment, determining the position of the processed low power consumption signal includes one of the following: the position of the processed low power consumption signal is determined based on positions of one or more POs; the position of the processed low power consumption signal is determined based on the positions and offsets of one or more POs, where the offset refers to a position offset relative to the PO, PF, or PEI; the position of the processed low power consumption signal is determined based on the positions and monitoring offsets of one or more POs, where the monitoring offset is a configured amount, which may be an offset based on a DRX, or may also be an offset based on the PO, PF, or PEI; the position of the processed low power consumption signal is determined based on a position of a PE and/or a position of a PEI; and the position of the processed low power consumption signal is determined based on an offset, the position of the PE and/or the position of the PEI.

In an exemplary embodiment, the monitoring position of the LP-WUS is located before the PO, PF, or PEI, or is located in an offset position before the PO, PF, or PEI. The PO, PF, or PEI is PO, PF, or PEI that is determined by a UE according to itself ID information and at least one of the PO configuration information, the PF configuration information, or the PEI configuration information.

In an exemplary embodiment, the offset refers to a position offset relative to the PO, PF, or PEI. The monitoring offset is a configured parameter, which may be an offset based on the DRX, or may also be an offset based on the PO, PF, or PEI.

In an exemplary embodiment, determining the first communication node behavior according to the configuration information and the low power consumption signal includes: target node information is determined according to the configuration information, where the target node information includes one of the following: node group information, node group set information, node group list information, node information, node set information, and node list information; and the first communication node behavior is determined according to the target node information.

In an exemplary embodiment, determining the target node information according to the configuration information includes: the target node information is determined according to the processing configuration information of the low power consumption signal.

In an exemplary embodiment, determining the target node information according to the processing configuration information of the low power consumption signal includes at least one of the following: the target node information is determined according to a monitoring space; the target node information is determined according to a monitoring space identity, an index, or a temporary identity; the target node information is determined according to different time domain positions; the target node information is determined according to a monitoring window, a monitoring duration, and a monitoring occasion; the target node information is determined according to different monitoring occasions within the monitoring window or monitoring duration; the target node information is determined according to different monitoring durations within the monitoring window; or the target node information is determined according to different monitoring windows or different monitoring durations. A target node includes a target UE.

In an exemplary embodiment, different monitoring spaces correspond to different pieces of target node information, or determining the target node information according to the monitoring space includes the following operation.

The target node information is determined according to RNTIs configured by different monitoring spaces or different Cyclic Redundancy Check (CRC) codes. In this embodiment, different target nodes are decoded by using different RNTIs or CRC codes. Different target nodes are UEs of different UE groups or different UEs.

In an exemplary embodiment, determining the target node information according to a monitoring space identity, an index, or a temporary identity includes, but is not limited to, the following.

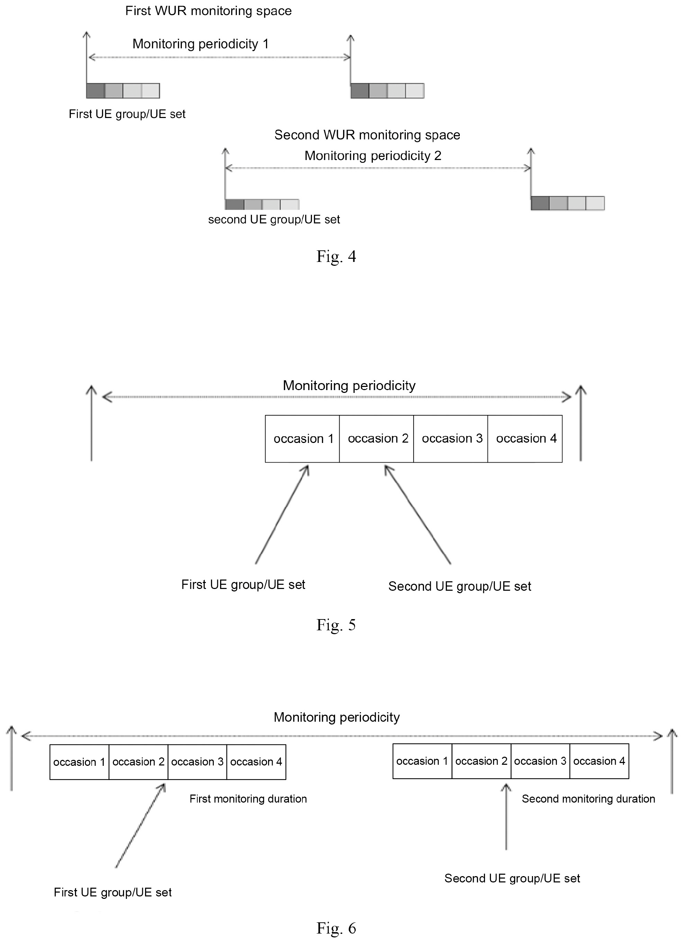

A group index range of a first monitoring space (i.e., a first WUR monitoring space in Fig. 4) is 1st-nth index, or corresponds to a first target UE set or a first target UE group; and the first target UE set corresponds to one UE ID or a group index range of the monitoring space.

In an embodiment, the group index range of the first monitoring space is obtained according to group index mod N1, and the first target UE set is obtained according to UE ID or TMSI mode N2.

In an embodiment, a target UE group index or index range or target UE is indicated by means of bitmap.

In an embodiment, the group index range of the first monitoring space, the first target UE set, a first target UE group set, a first target UE, or the first target UE group is obtained according to a modulus operation of group index/UE_ID, for example, obtained through mod P, where P is pre-configured or determined through high-layer configuration.

In an embodiment, the group index range of the first monitoring space, the first target UE group set, a first target UE set, the first target UE, or the first target UE group is configured in a monitoring space of WUR.

Parameters for the monitoring space further include the Monitoring periodicity, the monitoring duration, the monitoring window, the monitoring offset, etc.; and the above configuration information may also be set similarly.

In an exemplary embodiment, different time domain positions in the monitoring duration or monitoring window correspond to different pieces of target node information, and determining the target node information includes the following operation.

X1 slots (monitoring slots) or occasions (monitoring occasions) are included in one duration (monitoring duration); and a first slot/occasion corresponds to a first target UE subgroup, and a second slot/occasion corresponds to a second target UE subgroup, as shown in Fig. 5, different target UE groups or target UEs correspond to different monitoring occasions within the same monitoring duration. UE_ID/group index mod P=occasion index, where P is the maximum number of occasions within the duration, and P is pre-configured or configured by a base station/core network/high level.

In an exemplary embodiment, determining the target node information according to different monitoring occasions within the same monitoring window or monitoring duration includes the following operation.

In one or more DRX cycles, a first monitoring duration corresponds to the first target UE subgroup, a second monitoring duration corresponds to a second target UE subgroup, as shown in Fig. 6, that is, different target UE groups or target UEs correspond to different monitoring durations. UE_ID/group index mod P=duration index, where P is the number of durations.

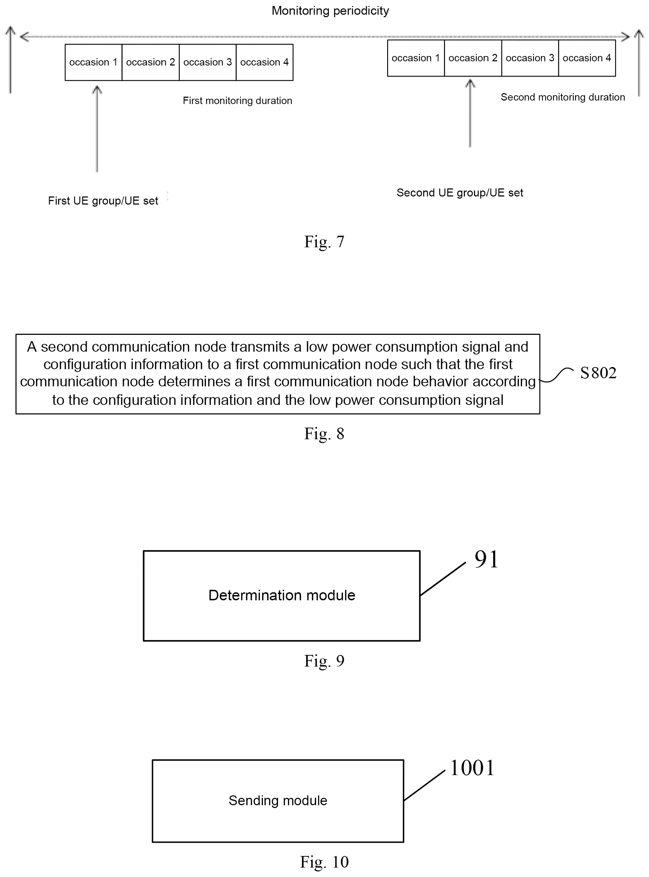

Based on the above two embodiments, target UE information is determined based on the duration and the position of an occasion, that is, different target UE groups or target UEs correspond to different monitoring occasions within different monitoring durations, as shown in Fig. 7.

Methods for implementing this correspondence relationship include the following.

### Implementation method 1:

$UE _ ID / group index mod P = duration index ,$ where P is the number of durations. $UE _ ID / group index mod Q = occasion index ,$ where Q is the number of occasions.

Both are met at the same time.

### Implementation method 2:

$UE _ ID / group index mod P * Q = occasion index in a DRX cycle ,$ where P is the number of durations, and Q is the number of occasions.

In an exemplary embodiment, within a given bandwidth, different frequency domain positions correspond to different target UE groups or target UEs, and the target UE group information is determined by high-layer signaling; and the monitoring space has different frequency domain position IDs, and different IDs correspond to different target UE groups or target UEs.

For example, the frequency domain position of the monitoring space is configured with an ID, and the monitoring space is also configured with target UE group information or target UE information. In this way, each configured monitoring space may correspond to different pieces of target UE group information or target UE information.

For another example, a monitoring position of the target UE in a frequency domain is determined based on a frequency domain configuration ID, ID mod P=group index or group index/UE_ID mod P=frequency domain ID.

A first bandwidth or frequency domain position corresponds to the first target UE group or the first target UE group set; and a second bandwidth or frequency domain position corresponds to a second target UE group or a second target UE group set.

For another example, determining the monitoring position of the UE in the frequency domain based on the bandwidth includes: group index/UE_ID mod X=bandwidth index, where X is a number based on a bandwidth within a given frequency domain range, for example, within 20 M, there are 4 5 Ms in total, and within 100 RBs, there are 4 25 RBs. The bandwidth indexes may be sorted either from highest to lowest or from lowest to highest.

In an exemplary embodiment, the first monitoring space is listened by a WUR of an OOK receiver, and a second monitoring space (i.e., a second WUR monitoring space in Fig. 4) is listened by a WUR of an OFDM receiver. Determining the target node information according to the monitoring space includes the following operations.

A first time domain position, a first monitoring duration, and a first occasion are listened by the WUR of the OOK receiver; and a second time domain position, a second monitoring duration, and a second occasion are listened by the WUR of the OFDM receiver.

A first frequency domain/bandwidth position is listened by the WUR of the OOK receiver; and the second time domain position, the second monitoring duration, and a second frequency domain/bandwidth position are listened by the WUR of the OFDM receiver.

In an exemplary embodiment, determining the target node information according to the configuration information includes: the target node information is determined according to the PO configuration information, where the PO configuration information includes at least one of the following: the number of POs, a PO index, a position of the PO, PO configuration, the number of POs in a PF, the number of PFs in a DRX cycle, the number of POs in the DRX cycle, a length of the DRX cycle, or the PF in which the PO is located.

In an exemplary embodiment, a PF and a PO for paging are determined by the following formula, and configuration and parameters therein may all be configured to determine the target node information.

An SFN of the PF is determined as follows. $\left(SFN+PF_offset\right) mod T = \left(TdvN\right) * \left(UE_ID mod N\right) mod \left(modulus function\right)$

An index (i_s) indicating the PO is determined as follows. $i _ s = floor \left(UE_ID/N\right) modNs$

T is a DRX cycle length (using a radio frame as a unit) of the UE; nB is a total number of POs in the DRX cycle; N is the number of PFs in the DRX cycle, which is =min(T, nB); and UE ID is IMSI mod 1024. Ns=max(1, nB/T), which is the number of POs in the PF. For each Ns value, the mapping of i_s in the PF and a subframe number (i.e., PO) is pre-defined.

In an exemplary embodiment, determining the target node information according to the configuration information includes: the target node information is determined according to the PF configuration information, where the PF configuration information includes at least one of the following: the number of PFs, a position of the PF, or PF configuration.

In an exemplary embodiment, determining the target node information according to the configuration information includes: the target node information is determined according to the PEI configuration information, wherein the PEI configuration information includes at least one of the following: a PEI position, PEI configuration, or a PF associated with a PEI.

In an embodiment, determining the first communication node behavior according to the configuration information and the low power consumption signal includes: target node information is determined according to the configuration information and the low power consumption signal; and the first communication node behavior is determined according to the target node information and the low power consumption signal.

In an exemplary embodiment, determining the target node information according to the configuration information and the low power consumption signal includes: the target node information is determined according to target node configuration information and low power consumption signal indication.

That is, the UE included in each group is determined by a core network/AMF/high-layer signaling/SIB, and a UE group list or a UE group is indicated, that is, a high layer determines each UE group, such that a specific group or group index is indicated by the LP-WUS for wake-up.

For example, there are X UE groups indicated by the high layer, and a manner for indicating the LP-WUS includes: using floor(log2(X)), log2(X), or ceil(log2(X)) bit to indicate group (index); and indicating one or more of the X UE groups by means of X bits, e.g., and bitmap, for example, using the bitmap to indicate the UE group that needs to be woken up.

For another example, the UE is divided into X groups via high-layer signaling, the first monitoring space is associated with 1-n₁ groups, and one of the 1-n₁ groups is indicated by the LP-WUS.

For another example, the UE is divided into X groups via high-layer signaling, the first monitoring space is associated with the 1-n₁ groups, within one monitoring duration of the first monitoring space, corresponding groups are determined as 1-n₂ according to an occasion position, and one of the 1-n₂ groups is indicated by the LP-WUS. Alternatively, X groups are formed via high-layer signaling, the first monitoring space is associated with the 1-n₁ groups, within certain monitoring durations in a plurality of DRX cycles, the corresponding groups are 1-n₂, and one of the 1-n₂ groups is indicated by the LP-WUS.

For another example, the UE is divided into X groups via high-layer signaling, the first monitoring space is associated with the 1-n₁ groups, 1-n₂ groups are further formed based on the time domain position of the monitoring duration of the monitoring space. Alternatively, 1-n₃ groups may also be formed through the frequency domain, and then indicated by the LP-WUS.

In an exemplary embodiment, determining the target node information according to the configuration information and the low power consumption signal includes: the target node information is determined according to the PO configuration information and the low power consumption signal indication.

For example, based on the PO group, the LP-WUS is associated with one PO, and the period of the LP-WUS is determined by the DRX, the number of PFs in DRX, the number of POs in PF, and UE_ID. The monitoring position of the LP-WUS is determined according to a start reference point and an offset. The reference point is a radio frame, subframe, or slot in the PF, or a radio frame, subframe, or slot in which the PO is located.

For another example, the monitoring position of the LP-WUS is determined according to the position and offset of the PO. The LP-WUS carries 22 to 28 bits of UE specific ID information, and the group information is less than the size. If the group information is carried, N bits of information may be indicated, and N bits refer to N=X-floor(log₂(Ns*N)), where X is X-bit LSB of 5G-S-TMSI, or 5G-TMSI or UE_ID. If the group information is carried, N bits of information may be indicated, and N bits refer to LSB of 5G-S-TMSI, 5G-TMSI or UE_ID, excluding bits lower than ceil(log₂(Ns*N)).

In an exemplary embodiment, determining the target node information according to the configuration information and the low power consumption signal includes: the target node information is determined according to the PF configuration information and the low power consumption signal indication.

For example, the LP-WUS and the PF have an association relationship, and are grouped and indicated based on the association relationship.

Based one PF, the LP-WUS is associated with one or more POs of the PF. The monitoring position of the LP-WUS is determined according to a start reference point and an offset. The reference point is a radio frame, subframe, or slot in the PF, or a radio frame in which one or more POs are located.

For another example, the monitoring position of the LP-WUS is determined according to the position and offset of the PF. The LP-WUS carries 24 to 32 bits of UE specific ID information, and the group information is less than the size. If the group information is carried, N bits of information may be indicated, and N bits refer to N=X-floor(log2(N)), where X is X-bit LSB of 5G-S-TMSI, or 5G-TMSI or UE_ID; and if the group information is carried, N bits of information may be indicated, and N bits refer to LSB of 5G-S-TMSI, 5G-TMSI or UE_ID, excluding bits lower than ceil(log2(N)).

In an embodiment, the LP-WUS may further carry M bits of information to indicate which POs need to be detected or which POs do not need to be detected, and the M is 0-2 bits to indicate that the corresponding maximum number of POs is 4.

In an exemplary embodiment, determining the first communication node behavior according to the configuration information and the low power consumption signal includes: target node information is determined according to the low power consumption signal; and the first communication node behavior is determined according to the target node information.

In an exemplary embodiment, determining the target node information according to the low power consumption signal includes at least one of the following: the low power consumption signal indicates one or more node groups in a node group set or node group list; the low power consumption signal is configured to determine one or more node groups in the node group set or node group list; the low power consumption signal indicates one or more node groups in a node set or node list; or the low power consumption signal is configured to determine one or more node groups in the node set or node list.

In an exemplary embodiment, determining the target node information according to the low power consumption signal includes: the target node information is determined according to the indication of the LP-WUS.

For example, the LP-WUS has M blocks, and each block carries N bits of information to indicate one or more of the X groups. An indication method includes: each block position is determined and detected by the UE_ID information, that is, different UE_IDs may detect different blocks.

For another example, group_index mod N=x, where x is a block index, which ranges from 0 to N-1, and Nbit indicates a group corresponding to one or more blocks. When x=1, there are 1024 groups in total; and N=8 means that the block with the block index being 1 includes the group of which index is group_index mod 8=1.

For another example, a high-layer group list has 1024 groups in total, and the LP-WUS uses 10 bits to indicate one of the groups.

For another example, the LP-WUS has X bits, each bit corresponds to one target node, and the target node determines its bit position according to its own target node information or ID information.

In an exemplary embodiment, the first communication node determines the first communication node behavior according to the configuration information and the low power consumption signal; and the method further includes: processing configuration information of the low power consumption signal corresponding to the first communication node is determined according to target node information, or a time domain position or frequency domain position at which the low power consumption signal is processed and that corresponds to the first communication node is determined.

In an exemplary embodiment, the UE determines a monitoring space identity of the low power consumption signal, a monitoring space index, a Monitoring periodicity, a monitoring window, a monitoring duration, a monitoring offset, a monitoring occasion (i.e., a processing occasion), temporary identity information, a frequency domain bandwidth, and an information type according to its own ID information, or the UE determines, according to its own ID information, the time domain position or frequency domain position for monitoring the low power consumption signal.

In an exemplary embodiment, target node information corresponding to indication information carried by the low power consumption signal has a subset relationship with or intersects with target node information corresponding to PEI configuration information.

In an exemplary embodiment, the target node information indicated by the LP-WUS such as group information has a subset relationship with or intersects with a group determined by the PEI. For example, the group indicated/determined by the LP-WUS is a subset of the groups determined by the PEI, or the group determined by the PEI is a subset of the groups indicated/determined by the LP-WUS. For example, the intersection between the group indicated/determined by the LP-WUS and the group indicated/determined by the PEI is not null.

In an exemplary embodiment, the indication information carried by the low power consumption signal is determined based on a 5G-S-TMSI or a 5G-TMSI or UE identity information or an RNTI.

In an exemplary embodiment, the RNTI includes an I-RNTI, a C-RNTI, or RNTIs configured by other base stations.

In an exemplary embodiment, the target node information is determined based on a 5G-S-TMSI or a 5G-TMSI or user equipment identity information or an RNTI.

In an exemplary embodiment, the low power consumption signal indicates at least one of the following information, either partially or in full: identity information configured by a base station, temporary identity information of a wireless network, index information, a 5G-S-TMSI, a 5G-TMSI, or user equipment identity information.

In an exemplary embodiment, in a case where the first communication node behavior is to process the paging channel, process the PDCCH, or send the PRACH, the method further includes: through the indication of the low power consumption signal or by means of pre-definition, a position at which the first communication node processes the PDCCH, a position of a PO, or a position for sending the PRACH is determined.

In an exemplary embodiment, through the indication of the low power consumption signal or by means of pre-definition, determining the position at which the first communication node processes the PDCCH, the position of the PO, or the position for sending the PRACH includes: according to the indication of the low power consumption signal or by means of pre-definition, a PO following the low power consumption signal or a next PO following the low power consumption signal is determined as the position of the PO of the first communication node; according to the indication of the low power consumption signal or by means of pre-definition, a PDCCH occasion following the low power consumption signal or a next PDCCH occasion following the low power consumption signal is determined as the position at which the first communication node processes the PDCCH; according to the indication of the low power consumption signal or by means of pre-definition, a PRACH occasion following the low power consumption signal or a next PRACH occasion following the low power consumption signal is determined as the position at which the first communication node sends the PRACH; according to the indication of the low power consumption signal or by means of pre-definition, a PO or a next PO after the position of the low power consumption signal is offset is determined as the position of the PO of the first communication node; according to the indication of the low power consumption signal or by means of pre-definition, a PDCCH occasion or a next PDCCH occasion after the position of the low power consumption signal is offset is determined as the position at which the first communication node processes the PDCCH; and according to the indication of the low power consumption signal or by means of pre-definition, a PRACH occasion or a next PRACH occasion after the position of the low power consumption signal is offset is determined as the position at which the first communication node sends the PRACH.

For example, X bits in the low power consumption signal are configured to indicate the PO, the PDCCH occasion, or the PRACH occasion. The number of occasions that may be indicated by the X bits is 2^{X}, and through the low power consumption signal, the (one among 2^{X}) PO, PDCCH occasion, or PRACH occasion following the low power consumption signal may be indicated as the position of the PO of the first communication node, the position of the PDCCH, or the position for sending the PRACH.

For another example, the PO, PDCCH occasion, or PRACH occasion after the position of the low power consumption signal is offset may be indicated as the position of the PO of the first communication node, the position of the PDCCH, or the position of the PRACH.

For another example, by means of pre-definition, the next or latest PO, PDCCH occasion, or PRACH occasion following the low power consumption signal is defined as the position of the PO of the first communication node, the position of the PDCCH, or the position for sending the PRACH.

For another example, by means of pre-definition, the next or latest PO, PDCCH occasion, or PRACH occasion after the position of the low power consumption signal is offset is defined as the position of the PO of the first communication node, the position of the PDCCH, or the position for sending the PRACH.

In an embodiment, after determining the position of the PO of the first communication node, the method further includes: the PDCCH is detected at the position of the PO of the first communication node, and then target node information is determined according to DCI in the PDCCH or a PDSCH scheduled by the PDCCH.

In an exemplary embodiment, the position of the PO/PDCCH is indicated through LP-WUS indication or by default.

For example, the LP-WUS has X bits to indicate the position of the PO/PDCCH, or the LP-WUS has X bits to indicate the position of a slot of the PO/PDCCH. The indication method includes the following.

The indication is the first following the LP-WUS, one of 2^{N}, or one of 2^{N-1}, a PDCCH occasion of a PDCCH searchspace of type 2.

The indication is the first after LP-WUS offset, one of 2^{N}, or one of 2^{N-1}, a PDCCH occasion of the PDCCH searchspace of type 2, where the offset is greater than or equal to 160 ms, 320 ms, 400 ms, or 800 ms.

For example, the default is the first or Nth PDCCH occasion following the LP-WUS. The default is the first or Nth PDCCH occasion after LP-WUS offset.

In an exemplary embodiment, determining the target node information through the DCI of the paging PDCCH includes the following.

For example, the group information of the UE or the ID information of the UE is indicated by using reserved bits.

For example, the group information is indicated by X bits, and the UE obtains the group information based on the LP-WUS, and then further obtains the group information in combination with indication in the DCI.

For example, the UE obtained the group information or part of the ID information based on the LP-WUS, and then further obtains the ID information in combination with indication in the DCI.

In an exemplary embodiment, determining the target node information through the paging PDSCH includes the following.

A list is defined to indicate the UE, UE group, or target node information that needs to be woken up.

The ID information of the UE includes 48-bit ng-5G-S-TMSI, or 32-bit 5G-TMSI, or X-bit configured ID information, such as service ID or traffic ID or RNTI, etc.

For example,

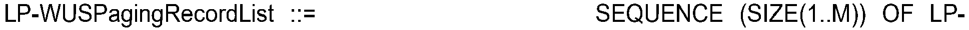

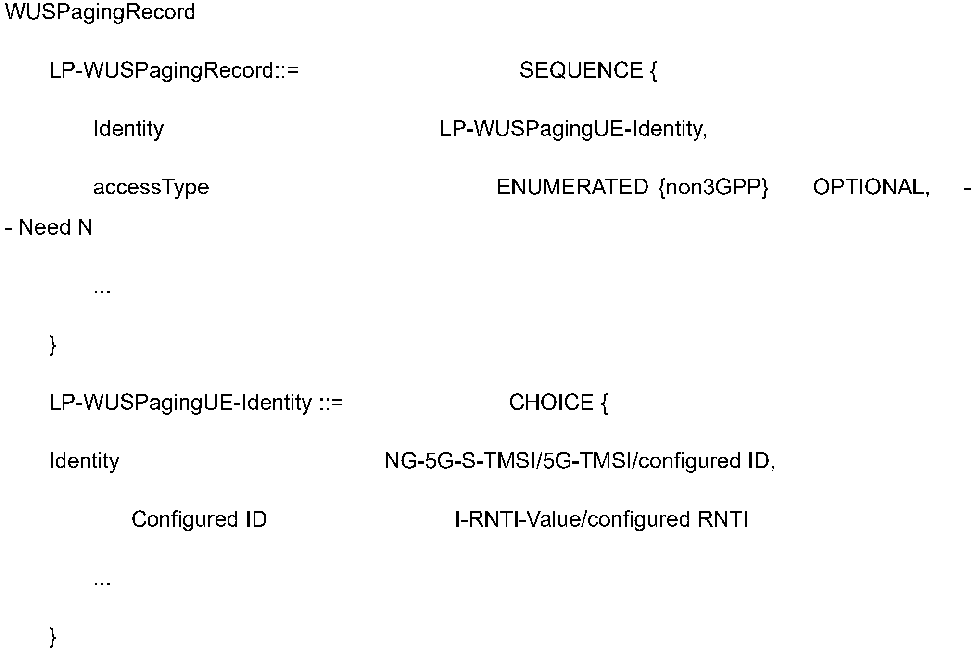

The UE group indicates that the information includes a group based on ng-5G-S-TMSI, or a group based on 5G-TMSI, or a group based on the PO, or a group configured by an X-bit base station, or a group configured by the base station.

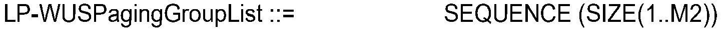

In an embodiment, the first communication node behavior is determined according to the configuration information and low power consumption signal information, only in a case where the first communication node has previously accessed to a current network or reported its capability to the current network.

In an exemplary embodiment, in a case where the UE has accessed the current network and/or reported parameters such as mobility, etc., whether the UE is woken up to listen the PDCCH is determined according to the configured ID information and the low power consumption signal indication.

Through the above steps, due to the use of the low power consumption signal, signal receiving may be performed at low power consumption. Moreover, the receiving of the low power consumption signal and the related first communication node behaviors are determined through the configuration information, and a channel node may be woken up with low power consumption and perform corresponding behaviors, such that the problem of waking up a communication node with low power consumption and performing corresponding behaviors in the related art is solved, thereby achieving an effect of saving energy or reducing time delays.

Fig. 8 is a flowchart of a signal processing method according to another embodiment of the present disclosure. The method is applied to a second communication node side. As shown in Fig. 8, the method includes the following steps.

At S802, a second communication node transmits a low power consumption signal and configuration information to a first communication node such that the first communication node determines a first communication node behavior according to the configuration information and the low power consumption signal.

In this embodiment, the first communication node behavior includes at least one of the following: being awakened, processing a PDCCH, processing a paging channel, processing PEI, sending a PRACH, processing the low power consumption signal, or processing an SIB or MIB or SIB with a changed SI.

In this embodiment, the configuration information includes at least one of the following: processing configuration information of the low power consumption signal, target node configuration information, PO configuration information, PF configuration information, or PEI configuration information.

In an exemplary embodiment, the processing configuration information of the low power consumption signal includes at least one of the following: a monitoring space identity, a monitoring space index, a Monitoring periodicity, a monitoring window, a monitoring duration, a monitoring offset, a monitoring occasion, temporary identity information, a frequency domain bandwidth, or an information type.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present disclosure substantially or parts making contributions to the conventional art may be embodied in form of software product, and the computer software product is stored in a storage medium (for example, a ROM/RAM), a magnetic disk and an optical disk), including a plurality of instructions configured to enable a terminal device (which may be a mobile phone, a computer, a server, a network device, or the like) to execute the method in each embodiment of the present disclosure.

This embodiment further provides a signal processing apparatus. The apparatus is configured to implement the foregoing embodiments and the preferred implementation, and what has been described will not be described again. As used below, the term "module" may be a combination of software and/or hardware that implements a predetermined function. Although the apparatus described in the following embodiments is preferably implemented in software, but implementations in hardware, or a combination of software and hardware, are also possible and conceived.

Fig. 9 is a structural block diagram of a signal processing apparatus according to an embodiment of the present disclosure. The apparatus is located on a first communication node. As shown in Fig. 9, the apparatus includes a determination module.

The determination module 91 is configured to determine a first communication node behavior according to configuration information and a low power consumption signal.

Fig. 10 is a structural block diagram of a signal processing apparatus according to another embodiment of the present disclosure. The apparatus is located on a second communication node. As shown in Fig. 10, the apparatus includes a sending module.

The sending module 1001 is configured to send a low power consumption signal and configuration information to a first communication node such that the first communication node determines a first communication node behavior according to the configuration information and the low power consumption signal.

It is to be noted that, each of the above modules may be implemented by software or hardware. For the latter, it may be implemented in the following manners, but is not limited to the follow: the above modules are all located in a same processor; or the above modules are located in different processors in any combination.

An embodiment of the present disclosure provides a Wake-Up Radio (WUR)-based signal processing method. The method mainly relates to two portions, which are configuration information configuration and a UE group. The configuration information configuration (i.e., WUR configuration) is performed by a second communication node, so as to provide configuration information to a first communication node; and the UE group is a UE or UE group (i.e., target node) that clarifies related UE behaviors (first communication node behavior) to be performed.

In this embodiment, the UE behavior includes at least one of the following: being awakened, monitoring a PDCCH, detecting a PO, detecting PEI, sending a PRACH, processing a low power consumption signal, detecting the low power consumption signal, listening the low power consumption signal, receiving the low power consumption signal, or processing an SIB or MIB or SIB with a changed SI.

In an exemplary embodiment, processing the SIB or MIB or SIB with a changed SI includes receiving the SIB or MIB or SIB with a changed SI. The position of the received SIB or MIB or SIB with a changed SI is determined according to LP-WUS indication and/or an offset, or the receiving of a next or latest SIB or SSB is determined according to LP-WUS.

In an exemplary embodiment, processing the PEI includes processing the PDCCH or DCI corresponding to the PEI.

In an embodiment, the configuration information includes, but is not limited to, the following information: processing configuration information of the low power consumption signal, UE indication information, PO configuration information, PF configuration information, or PEI configuration information.

In an embodiment, an always-on mode and a duty cycle mode are included. The processing configuration information of the low power consumption signal includes, but is not limited to: a monitoring space identity, a monitoring space index, a Monitoring periodicity, a monitoring window, a monitoring duration, a monitoring offset, a monitoring occasion, temporary identity information, or a frequency domain bandwidth.

In the duty cycle mode, the Monitoring periodicity may be implicitly determined or individually configured. There may be one or more Monitoring periodicitys configured. For example, different monitoring spaces, different formats, or different UEs may correspond to different Monitoring periodicitys.

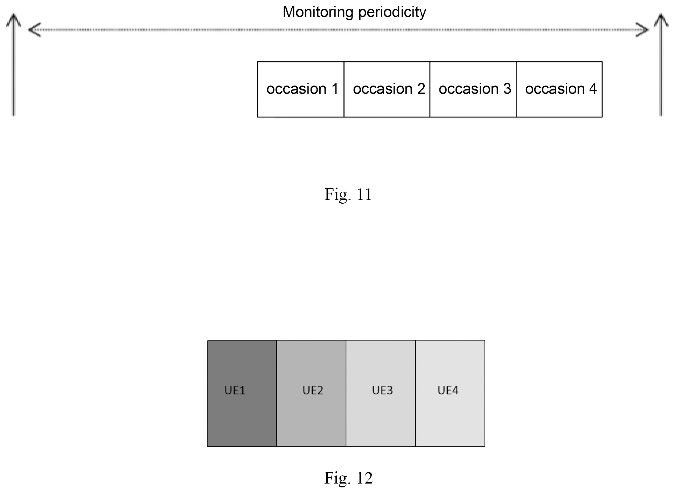

Fig. 11 is a schematic diagram of a Monitoring periodicity according to an embodiment of the present disclosure. As shown in Fig. 11 (in an example of a duration), one cycle may be configured with one or more durations (i.e., monitoring durations), and each duration has one or more occasions (i.e., monitoring occasions).

In an embodiment, the duration is less than or equal to one Monitoring periodicity, and is determined by an offset and the monitoring duration.

In an embodiment, when the duration equals one Monitoring periodicity and an M parameter is absent, the number of times for transmitting the low power consumption signal (e.g., LP-WUS) within one Monitoring periodicity defaults to 1, that is, it indicates that the LP-WUS is transmitted at most once within one Monitoring periodicity, or the repeated LP-WUS or non-repeated LP-WUS is transmitted at most once within one cycle.

In an embodiment, when the duration equals one Monitoring periodicity and an M parameter is present, for example, the value of the M is 2, it indicates that the LP-WUS is transmitted at most twice within one cycle, or the repeated LP-WUS or non-repeated LP-WUS is transmitted at most twice within one cycle, where the value of the M may also be 4, 8, etc.

In an embodiment, each occasion is based on one or more slots. For example, a time domain position is indicated by L bits, and a time domain length of the occasion is determined by L. For example, each bit indicates Q symbols, and the time domain length of the occasion is L*Q symbols, which are L*Q/14 slots.

In an embodiment, the Monitoring periodicity and the offset are configured by one parameter.

In an embodiment, the Monitoring periodicity may be mapped with an index of the UE group or mapped with the ID of the UE.

In an embodiment, when the ID of the monitoring space is 0, an LP-SS or a public LP-WUS is correspondingly monitored, or a monitored signal carries public information, including an SI change, CMAS/ETWS, wake-up information, etc.

In an embodiment, when the ID of the monitoring space is within a certain range, such as 1 to x₁, an LP-WUS of a group or a UE specific LP-WUS is correspondingly monitored.

In an embodiment, when no duty cycle is configured, a default monitoring mode is always-on; and when no always-on mode is configured, the default monitoring mode is the duty cycle mode.

In an embodiment, the configuration information is as follows.

The monitoring space includes:
{Monitoring space ID, configured to determine a resource or position of a time domain
frequency domain resource configuration/frequency domain configuration ID, configured to determine a resource or position of a frequency domain
the monitoring space includes
{a cycle is, for example, 320 ms, 640 ms, 1.28 s, 2.56 s;
first duration, first offset and/or duration, first occasion configuration
second duration, second offset and/or duration, second occasion configuration
   }
   }

In an embodiment, a UE group index, a UE group list, and a UE group set are configured in the monitoring space. Under the configuration of each group index, group list, or group set, RNTI information or CRC information is also included.

In an embodiment, the RNTI information or CRC information is configured in the monitoring space, that is, a specific preamble/PRACH resource is configured in the monitoring space.

In an embodiment, target node information such as group information is determined according to processing configuration information of the low power consumption signal, target node configuration information, PO configuration information, PF configuration information, PEI configuration information, and/or the low power consumption signal. The following manners are included.

Manner 1: The LP-WUS indicates grouping.

The UE included in each group is determined by a core network/AMF/high-layer signaling/SIB, and a UE group list or a UE group is indicated, that is, a high layer determines each UE group, such that a specific group or group index is indicated by the LP-WUS for wake-up.

Manner 2: Different monitoring spaces correspond to different target UE groups or target UEs.

The UE group set or UE set is indicated by the core network/AMF/high-layer signaling/SIB. Through pre-configuration, different monitoring spaces correspond to different UE groups or UE sets. The UE group set includes one or more groups, and the UE set includes one or more UEs.

Manner 3: Different time domain positions within the monitoring duration or monitoring window correspond to different target UE groups or target UEs.

Manner 4: Within a given bandwidth, different frequency domain positions correspond to different target UE groups or target UEs, and the group information is determined by high-layer signaling; and the monitoring space has different frequency domain position IDs, and different IDs correspond to different target UE groups or target UEs.

Manner 5: Different monitoring spaces correspond to different target UE groups or target UEs, that is, a first monitoring space is listened by a WUR of an OOK receiver, and a second monitoring space is listened by a WUR of an OFDM receiver.

Manner 6: Mixed manner, the group information is determined based on at least 2 of the above Manners 1-5.

For example, X groups are formed via high-layer signaling, the first monitoring space is associated with 1-n₁ groups, and one of the 1-n₁ groups is indicated by the LP-WUS.

For example, the X groups are formed via high-layer signaling, the first monitoring space is associated with the 1-n₁ groups, within one monitoring duration of the first monitoring space, corresponding groups are determined as 1-n₂ according to an occasion position, and one of the 1-n₂ groups is indicated by the LP-WUS. Alternatively, the X groups are formed via high-layer signaling, the first monitoring space is associated with the 1-n₁ groups, within certain monitoring durations in a plurality of DRX cycles, the corresponding groups are 1-n₂, and one of the 1-n₂ groups is indicated by the LP-WUS.

For example, the X groups are formed via high-layer signaling, the first monitoring space is associated with the 1-n₁ groups, 1-n₂ groups are further formed based on the time domain position of the monitoring duration of the monitoring space. Alternatively, 1-n₃ groups may also be formed through the frequency domain, and then indicated by the LP-WUS.

Manner 7: Grouping based on PO/PF/DRX.

For a UE listened by a specific PF, a base station may know the last few bits of its UE_ID or TMSI, which are determined by Ns*N, corresponding to lower log2(Ns*N) bits, with a maximum of 10 bits and a minimum of T/16. e.g., 20, 4 bits, such that the size of the LP-WUS that additionally needs to indicate UE specific wake-up is 28-22 bits (based on 32-bit 5G-TMSI), or 38-44 bits (based on 48-bit 5G-S-TMSI), and the size of the LP-WUS that additionally needs to indicate group specific wake-up is less than 28-22 bits, or 38-44 bits.

Manner 7.1: The LP-WUS and the PO have an association relationship, and are grouped and indicated based on the association relationship.

Based on the PO group, the LP-WUS is associated with one PO, and the period of the LP-WUS is determined by the DRX, the number of PFs in DRX, the number of POs in PF, and UE_ID.

The monitoring position of the LP-WUS is determined according to a start reference point and an offset.

Manner 7.2: The LP-WUS and the PF have an association relationship, and are grouped and indicated based on the association relationship.

In an embodiment, based one PF, the LP-WUS is associated with one or more POs of the PF.

In an embodiment, based on one or more PFs, the LP-WUS is associated with the POs corresponding to these PFs, or associated with these PFs.

For example, the monitoring position of the LP-WUS is determined according to a start reference point and an offset. The reference point is determined by one PF or the first PF among a plurality of PFs.

For another example, the monitoring position of the LP-WUS is determined according to a start PF or the position and offset of one of the PFs.

The LP-WUS carries 32 bits of UE specific ID information.

If the group information is carried, the carrying of a 10-bit UE_ID or the longer LSB of 5G-TMSI or 5G-S-TMSI may be taken into consideration.

If the group information is carried, further grouping may be performed based on the group information of the POs of one or more PFs. For example, $\left(SFN1+PF_offset\right) mod T = \left(T div N\right) * \left(UE_ID1 mod N\right)$ $\left(SFN2+PF_offset\right) mod T = \left(T div N\right) * \left(UE_ID2 mod N\right)$

UE_ID1 and UE_ID2 are combined into one group, and which UE_ID group needs to listen the PO in the PF is further indicated through the LP-WUS1-2 bits.

The LP-WUS instruction includes determining which UEs corresponding to the PFs need to monitor the POs therein, or which UEs corresponding to the PFs do not need to monitor the POs therein.

The LP-WUS instruction includes determining which UEs corresponding to the PFs and POs need to be monitored, or which UEs corresponding to the PFs and POs do not need to be monitored.

In an embodiment, based on one or more DRXes, the LP-WUS is associated with all POs or PFs in these DRXes.

For example, the monitoring position of the LP-WUS is determined according to the start reference point and an offset, and the reference point is determined by one PF or the first PF among a plurality of PFs.

For another example, the monitoring position of the LP-WUS is determined according to a start PF or the position and offset of one of the PFs.

For another example, the monitoring position of the LP-WUS is determined according to the configuration and offset of the DRX, and the monitoring position of the LP-WUS is determined according to a start DRX and an offset.

The LP-WUS indicates which DRX needs to perform PO listening or not perform listening. The LP-WUS indicates which PO needs to perform listening or not perform listening.

The LP-WUS indicates which PF in the DRX needs to perform PO listening or not perform listening.

The LP-WUS indicates which PO in the DRX needs to perform listening or not perform listening.

Overall, Manner 7 needs more bit information to indicate UE specific wake-up. For grouping, PF/PO-related wake-up is also indicated through specific control information. Furthermore, if more POs, PFs, or DRXes correspond to one LP-WUS, an impact on a resource utilization rate of a system is less. However, the granularity of the LP-WUS group needs to be coarser. If the probability of wake-up before each PO is relatively low, monitoring before every PO is indeed unnecessary.

In the embodiments of the present disclosure, grouping may also be further performed by the following operations.

I, different time domain positions correspond to different groups according to the monitoring duration.

For example, X1 slots are included within one monitoring duration; a first slot corresponds to a first group; and a second slot corresponds to a second group. A specific implementation includes: different monitoring positions of the group UE are obtained through index modulus of an occasion.

II, within a given bandwidth, different frequency domain positions correspond to different groups, for example, a first bandwidth or frequency domain position corresponds to a first UE group. The group information is determined by high-layer signaling; and related configuration includes: an LP-WUS configuration cycle, UE indication configuration, Offset configuration, and Reference configuration.

Manner 8: Grouping based on PEI.

In an embodiment, whether the PEI is listened is indicated before the PEI.

In this embodiment, the LP-WUS uses only 1 bit to indicate, in a sequence manner, whether to monitor the PEI. In this case, the UEs that need to be woken up in the LP-WUS >= the UEs that need to be woken up in the PEI, and false wake-ups may be reduced by directly using an equal sign. Furthermore, the UEs for listening are not required in the PEI, and thus may also be excluded from LP-WUS.

In this embodiment, the LP-WUS needs to be configured with an offset based on the reference position of the PEI, a configured reference position, or a default PF.

In an embodiment, in a UE set corresponding to PF1 and PF2, 8 bits of the LP-WUS indicate the PO to be monitored among up to 8 POs in the 2 PFs, such that some UEs may be prevented from waking up to monitor the PEI.

In an embodiment, an LP-WUS group intersects with a PEI group.

The LP-WUS group and the PEI group have a subset relationship, that is, having an intersection relationship. In this case, the grouping method includes: first dividing by the PEI group, then mod LP-WUS; and performing separate grouping when the LP-WUS group and the PEI group have no intersection relationship.

In an embodiment, the PEI group is configured for the LP-WUS, and the base station configures its own parameters to determine the groups and a potential relationship with the PEI.

In an embodiment, for the UE group corresponding to PF1 and PF2 (8*8=64 subgroups), every two or more subgroups (sub-UE groups) are grouped into one group and indicated by up to 32 bits, or the subgroups of a CN or RAN side are combined to cause the number of groups to be M, and an M1 bit may indicate whether one or more groups therein need to listen the PEI or do not need to listen the PEI.

The embodiments of the present disclosure further provide a signal processing method for a specific UE and using a UE behavior to wake up a terminal. For information carried by an LP-WUS and how to carry the information, the method includes the following manners.

Manner 1: 32-bit TMSI and in combination with other information. In this manner, inter-cell paging may be used, but changes in a tracking area need to be taken into consideration. If the UE must be woken up during cell handover, the base station retains the position of the known UE, and if the position changes, the base station may notify the core network. If the core network does not need to know whether the UE supports the LP-WUS, the base station needs to know whether the UE supports the LP-WUS, so as to determine whether to use the LP-WUS for wake-up. If the core network knows that the UE supports the LP-WUS, the base station may be directly informed to use the LP-WUS for wake-up for the woken-up UE supports the LP-WUS, and the base station determines, according to actual situations, whether to use LP-WUS or paging for wake-up.

Manner 2: IDs are reallocated by a live network and applied to one tracking area and one or more cells. When performing UE-specific paging, the LP-WUS carries the ID information.

Manner 3: UE-ID allocated by the base station and in combination with other information. Paging can only be performed in the current cell in this manner.

In an embodiment, if the length of the UE-ID is small, the reuse of a plurality of UEs may be performed.

For example, when the UE-ID is 8 bits, 3-4 UEs may be reused. As shown below, the plurality of UEs share one CRC attachment, as shown in Fig. 12. However, different UEs carry different bits.

Manner 4: A unique ID is determined by using information such as a PO, a PF, a time domain, a frequency domain, or high-layer configuration, etc., and in combination with the group information or indication information of the LP-WUS.

Manner 5: The UE performs an operation such as modulus according to an ID allocated by the base station, so as to obtain 1/2 bits to correspond to whether the UE is woken up. The scrambling of the LP-WUS or CRC is allocated and determined by the base station.

In a case where the UE behavior is to detect paging, an embodiment of the present disclosure further provides a method for determining an occasion position. An occasion includes a PO, a PDCCH occasion, and a PRACH occasion. The LP-WUS may instruct the current UE to perform paging or process a PDCCH or send a PRACH at other occasions.

In an exemplary embodiment, the position of the PO is determined. The position of the PO is determined through LP-WUS indication or in a preset manner. That is, the LP-WUS has N bits to indicate PO/PDCCH position/PRACH position, where N is a positive integer. Alternatively, the LP-WUS has N bits to indicate the position of the slot of the PO/PDCCH/PRACH.

For example, the indication is the first following the LP-WUS or one of 2^{N}, a PDCCH occasion of a PDCCH searchspace of type 2.0.

For another example, the indication is the first after LP-WUS offset or one of 2^{N}, a PDCCH occasion of the PDCCH searchspace of type 2, where the offset is greater than or equal to 160 ms, 320 ms, 400 ms, or 800 ms.

For another example, the default is the first or Nth PDCCH occasion following the LP-WUS.

For another example, the default is the first or Nth PDCCH occasion after LP-WUS offset.

In an exemplary embodiment, the ID of the UE or the target UE information is indicated through the DCI.

The group information of the UE or the ID information of the UE is indicated by using reserved bits.

For example, the group information is indicated by X bits, and the UE obtains the group information based on the LP-WUS, and then further obtains the group information in combination with indication in the DCI.

For another example, the ID information of the UE is indicated by using X bits, the UE obtained the group information or part of the ID information based on the LP-WUS, and then further obtains the ID information in combination with indication in the DCI.

In an exemplary embodiment, the target UE information is indicated in the paging PDSCH.

For example, a list that is configured to indicate the UE or UE group that needs to be woken up is defined.

In an embodiment, the UE identity information includes 48-bit ng-5G-S-TMSI, or 32-bit 5G-TMSI, or X-bit configured ID information, such as service ID or traffic ID or RNTI, etc.

For example,

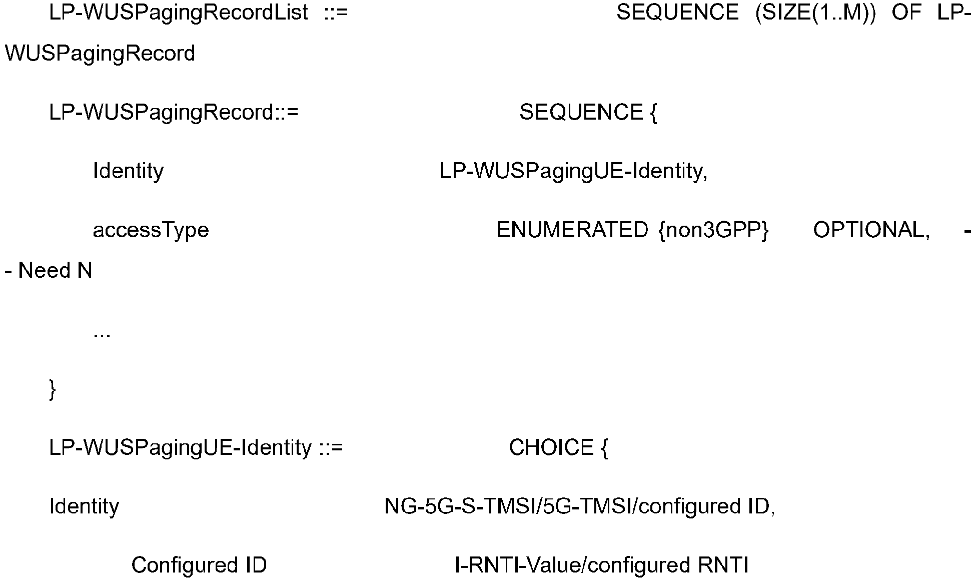

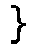

In an embodiment, the UE group indicates that the information includes a group based on ng-5G-S-TMSI, a group based on 5G-TMSI, a group based on the PO, a group configured by an X-bit base station, or a group configured by the base station.

In the embodiments of the present disclosure, according to the low power consumption signal and the high-layer configured configuration information, a terminal group or a specific terminal may be indicated to perform related UE behaviors with low power consumption, such that terminal power consumption may be reduced, and time delays are reduced, thereby improving user experience.

An embodiment of the present disclosure further provides a computer-readable storage medium. The computer-readable storage medium stores a computer program. Steps in any one of the above method embodiments are executed when the computer program is configured to operate.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

An embodiment of the present disclosure further provides an electronic apparatus. The electronic apparatus includes a memory and a processor. The memory is configured to store a computer program. The processor is configured to run the computer program to execute steps in any one of method embodiments described above.

In an exemplary embodiment, the electronic apparatus may further include a transmission device and an input/output device. The transmission device is connected to the processor. The input/output device is connected to the processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present disclosure may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure are not limited to any specific combination of hardware and software.

The above are only the preferred embodiments of the present disclosure and are not intended to limit the present disclosure. For those skilled in the art, the present disclosure may have various modifications and variations. Any modifications, equivalent replacements, improvements and the like made within the principle of the disclosure shall fall within the scope of protection of the present disclosure.

## Claims

1. A signal processing method, comprising:
determining, by a first communication node, a first communication node behavior according to configuration information and a low power consumption signal.

2. The method according to claim 1, wherein the first communication node behavior comprises at least one of the following:
being awakened, processing a Physical Downlink Control Channel (PDCCH), processing a paging channel, processing Paging Early Indication (PEI), sending a Physical Random Access Channel (PRACH), or processing the low power consumption signal.

3. The method according to claim 1, wherein the configuration information comprises at least one of the following: processing configuration information of the low power consumption signal, target node configuration information, Paging Occasion (PO) configuration information, Paging Frame (PF) configuration information, or PEI configuration information.

4. The method according to claim 3, wherein the processing configuration information of the low power consumption signal comprises at least one of the following:
a monitoring space identity, a monitoring space index, a Monitoring periodicity, a monitoring window, a monitoring duration, a monitoring offset, a monitoring occasion, temporary identity information, a frequency domain bandwidth, or an information type.

5. The method according to claim 4, wherein the processing configuration information of the low power consumption signal comprises at least one of the following:
one or more monitoring windows or monitoring durations being comprised within one Monitoring periodicity;
one or more monitoring durations being comprised within one monitoring window;
one or more monitoring occasions being comprised within one monitoring window or one Monitoring periodicity or one monitoring duration;
continuous monitoring occasions being comprised within one monitoring window or one Monitoring periodicity or one monitoring duration; or
the number of times for processing the low power consumption signal on one monitoring occasion or monitoring window or monitoring duration or Monitoring periodicity having a lower limit and/or an upper limit.

6. The method according to claim 4, wherein the processing configuration information of the low power consumption signal comprises at least one of the following:
the low power consumption signal transmitted in a monitoring space being a low power consumption synchronous signal, in a case where the monitoring space identity or the monitoring space index is 0, wherein the low power consumption synchronous signal carries first information;
the low power consumption signal transmitted in the monitoring space being a low power consumption wake-up signal, in a case where the monitoring space identity or the monitoring space index is not 0, wherein the low power consumption wake-up signal carries second information;
the low power consumption signal transmitted in the monitoring space carrying the first information, in a case where the value of the monitoring space identity or the monitoring space index is 0 or is located within a first value range; or
the low power consumption signal transmitted in the monitoring space carrying the second information, in a case where the value of the monitoring space identity or the monitoring space index is not 0 or is located within a second value range.

7. The method according to claim 3, wherein the target node configuration information is indicated by a core network, an Access and Mobility Management Function (AMF), high-layer signaling, or a System Information Block (SIB); and the target node configuration information comprises at least one of the following information: a node group, a node group set, a node group list, a node, a node set, or a node list.

8. The method according to claim 2, wherein processing the low power consumption signal comprises:
determining a position of the processed low power consumption signal.

9. The method according to claim 8, wherein determining the position of the processed low power consumption signal comprises:
determining the position of the processed low power consumption signal according to at least one of PO configuration information, PF configuration information, or PEI configuration information.

10. The method according to claim 9, wherein determining the position of the processed low power consumption signal according to at least one of the PO configuration information, the PF configuration information, or the PEI configuration information comprises:
determining the position of the processed low power consumption signal according to a position of a PO, a position of a PF, or a position of a PEI, wherein the position of the processed low power consumption signal is associated with the position of the PO, the position of the PF, or the position of the PEI; and the position of the PO, the position of the PF, or the position of the PEI is determined according to the PO configuration information, the PF configuration information, and the PEI configuration information, respectively.

11. The method according to claim 8, wherein determining the position of the processed low power consumption signal comprises one of the following:
determining the position of the processed low power consumption signal based on positions of one or more POs;
determining the position of the processed low power consumption signal based on the positions and offsets of one or more POs;
determining the position of the processed low power consumption signal based on the positions and monitoring offsets of one or more POs;
determining the position of the processed low power consumption signal based on a position of a PE and/or a position of a PEI; and
determining the position of the processed low power consumption signal based on an offset, the position of the PE and/or the position of the PEI.

12. The method according to claim 3, wherein determining the first communication node behavior according to the configuration information and the low power consumption signal comprises:
determining target node information according to the configuration information, wherein the target node information comprises one of the following: node group information, node group set information, node group list information, node information, node set information, and node list information; and
determining the first communication node behavior according to the target node information.

13. The method according to claim 12, wherein determining the target node information according to the configuration information comprises:
determining the target node information according to the processing configuration information of the low power consumption signal.

14. The method according to claim 13, wherein determining the target node information according to the processing configuration information of the low power consumption signal comprises at least one of the following:
determining the target node information according to a monitoring space;
determining the target node information according to a monitoring space identity, an index, and a temporary identity;
determining the target node information according to different time domain positions;
determining the target node information according to a monitoring window, a monitoring duration, and a monitoring occasion;
determining the target node information according to different monitoring occasions within the monitoring window or monitoring duration;
determining the target node information according to different monitoring durations within the monitoring window; or
determining the target node information according to different monitoring windows or different monitoring durations.

15. The method according to claim 12, wherein determining the target node information according to the configuration information comprises:
determining the target node information according to the PO configuration information, wherein the PO configuration information comprises at least one of the following: the number of POs, a PO index, a position of the PO, PO configuration, the number of POs in a PF, the number of PFs in a DRX cycle, the number of POs in the DRX cycle, a length of the DRX cycle, or the PF in which the PO is located.

16. The method according to claim 12, wherein determining the target node information according to the configuration information comprises:
determining the target node information according to the PF configuration information, wherein the PF configuration information comprises at least one of the following: the number of PFs, a position of the PF, or PF configuration.

17. The method according to claim 12, wherein determining the target node information according to the configuration information comprises:
determining the target node information according to the PEI configuration information, wherein the PEI configuration information comprises at least one of the following: a PEI position, PEI configuration, or a PF associated with a PEI.

18. The method according to claim 1, wherein determining the first communication node behavior according to the configuration information and the low power consumption signal comprises:
determining target node information according to the configuration information and the low power consumption signal; and
determining the first communication node behavior according to the target node information and the low power consumption signal.

19. The method according to claim 1, wherein determining the first communication node behavior according to the configuration information and the low power consumption signal comprises:
determining target node information according to the low power consumption signal; and
determining the first communication node behavior according to the target node information.

20. The method according to claim 18 or 19, wherein determining the target node information according to the low power consumption signal comprises at least one of the following:
the low power consumption signal indicating one or more node groups in a node group set or node group list;
the low power consumption signal being configured to determine one or more node groups in the node group set or node group list;
the low power consumption signal indicating one or more node groups in a node set or node list; or
the low power consumption signal being configured to determine one or more node groups in the node set or node list.

21. The method according to claim 1, wherein the first communication node determines the first communication node behavior according to the configuration information and the low power consumption signal; and the method further comprises:
determining processing configuration information of the low power consumption signal corresponding to the first communication node according to target node information, or determining a time domain position or frequency domain position at which the low power consumption signal is processed and that corresponds to the first communication node.

22. The method according to claim 18 or 19, wherein target node information corresponding to indication information carried by the low power consumption signal has a subset relationship with or intersects with target node information corresponding to PEI configuration information.

23. The method according to any one of claims 1 to 19 and 21, wherein the indication information carried by the low power consumption signal is determined based on a 5G-Shortened-Temporary Mobile Subscriber Identity (5G-S-TMSI) or a 5G-TMSI or User Equipment (UE) identity information or a Radio Network Temporary Identity (RNTI).

24. The method according to any one of claims 1 to 19 and 21, wherein the target node information is determined based on a 5G-S-TMSI or a 5G-TMSI or user equipment identity information or an RNTI.

25. The method according to claim 1, wherein the low power consumption signal indicates at least one of the following information, either partially or in full: identity information configured by a base station, temporary identity information of a wireless network, index information, a 5G-S-TMSI, a 5G-TMSI, or user equipment identity information.

26. The method according to claim 2, wherein in a case where the first communication node behavior is to process the paging channel, process the PDCCH, or send the PRACH, the method further comprises:
through the indication of the low power consumption signal or by means of pre-definition, determining a position at which the first communication node processes the PDCCH, a position of a PO, or a position for sending the PRACH.

27. The method according to claim 26, wherein through the indication of the low power consumption signal or by means of pre-definition, determining the position at which the first communication node processes the PDCCH, the position of the PO, or the position for sending the PRACH comprises:
according to the indication of the low power consumption signal or by means of pre-definition, determining a PO following the low power consumption signal or a next PO following the low power consumption signal as the position of the PO of the first communication node;
according to the indication of the low power consumption signal or by means of pre-definition, determining a PDCCH occasion following the low power consumption signal or a next PDCCH occasion following the low power consumption signal as the position at which the first communication node processes the PDCCH;
according to the indication of the low power consumption signal or by means of pre-definition,
determining a PRACH occasion following the low power consumption signal or a next PRACH occasion following the low power consumption signal as the position at which the first communication node sends the PRACH;
according to the indication of the low power consumption signal or by means of pre-definition, determining, as the position of the PO of the first communication node, a PO or a next PO after the position of the low power consumption signal is offset;
according to the indication of the low power consumption signal or by means of pre-definition, determining, as the position at which the first communication node processes the PDCCH, a PDCCH occasion or a next PDCCH occasion after the position of the low power consumption signal is offset; and
according to the indication of the low power consumption signal or by means of pre-definition, determining, as the position at which the first communication node sends the PRACH, a PRACH occasion or a next PRACH occasion after the position of the low power consumption signal is offset.

28. The method according to claim 27, wherein after determining the position of the PO of the first communication node, the method further comprises:
detecting the PDCCH at the position of the PO of the first communication node, and then determining target node information according to Downlink Control Information (DCI) in the PDCCH or a PDSCH scheduled by the PDCCH.

29. The method according to claim 1, wherein the first communication node behavior is determined according to the configuration information and low power consumption signal information, only in a case where the first communication node has previously accessed to a current network or reported its capability to the current network.

30. A signal processing method, comprising:
transmitting, by a second communication node, a low power consumption signal and configuration information to a first communication node such that the first communication node determines a first communication node behavior according to the configuration information and the low power consumption signal.

31. The method according to claim 30, wherein the first communication node behavior comprises at least one of the following:
being awakened, processing a Physical Downlink Control Channel (PDCCH), processing a paging channel, processing Paging Early Indication (PEI), sending a Physical Random Access Channel (PRACH), or processing the low power consumption signal.

32. The method according to claim 31, wherein the configuration information comprises at least one of the following: processing configuration information of the low power consumption signal, target node configuration information, Paging Occasion (PO) configuration information, Paging Frame (PF) configuration information, or PEI configuration information.

33. The method according to claim 32, wherein the processing configuration information of the low power consumption signal comprises at least one of the following: a monitoring space identity, a monitoring space index, a Monitoring periodicity, a monitoring window, a monitoring duration, a monitoring offset, a monitoring occasion, temporary identity information, a frequency domain bandwidth, or an information type.

34. A signal processing apparatus, located on a first communication node and comprising:
a determination module, configured to determine a first communication node behavior according to configuration information and a low power consumption signal.

35. A signal processing apparatus, located on a second communication node and comprising:
a sending module, configured to send a low power consumption signal and configuration information to a first communication node such that the first communication node determines a first communication node behavior according to the configuration information and the low power consumption signal.

36. A computer-readable storage medium, having a computer program stored therein, wherein the computer program is configured to, when executed by a processor, cause the processor to implement steps of the method as claimed in any one of claims 1 to 29, or to implement steps of the method as claimed in any one of claims 30 to 33.

37. An electronic apparatus, comprising a memory, a processor, and a computer program that is stored in the memory and executable on the processor, wherein the processor is configured to execute the computer program to implement steps of the method as claimed in any one of claims 1 to 29, or to implement steps of the method as claimed in any one of claims 30 to 33.
